Europäisches Patentamt

European Patent Office

Office européen des brevets

(11) Publication number : **0 511 176 A2**

# (12) EUROPEAN PATENT APPLICATION

(21) Application number : 92830174.6

(22) Date of filing : 09.04.92

(51) Int. Cl.⁵ : **B03B 9/06,** B02C 19/18, B07B 13/00

(30) Priority : 24.04.91 IT FI910094

(43) Date of publication of application :
28.10.92 Bulletin 92/44

(84) Designated Contracting States :
AT BE CH DE DK ES FR GB GR IT LI LU MC NL
PT SE

(71) Applicant : PRO.CO.GEN. PROGETTAZIONI E
COSTRUZIONI GENERALI S.p.A.
Via dei Della Robbia 89
I-50132 Firenze (IT)

(72) Inventor : Gentile, Gianpiero
Via dei Della Robbia n. 89
I-50132 Firenze (IT)
Inventor : Andreini, Guido
Via O. da Pordenone n. 36
I-50127 Firenze (IT)
Inventor : Bacci, Mirco
via Filadelfia n. 7
I-50126 Firenze (IT)
Inventor : Petruzzelli, Riccardo
Via Scannavini n. 9
I-51016 Montecatini Terme, Pistoia (IT)

(74) Representative : Mannucci, Gianfranco,
Dott.-Ing. et al
Ufficio Tecnico Ing. A. Mannucci Via della
Scala 4
I-50123 Firenze (IT)

(54) Process and installation for the cryodestruction of solid urban waste.

(57) The solid urban waste is subjected to forced cooling and the material which has been hardened and made fragile by the cooling is ground, in order then to carry out the ballistic and magnetic grading of the ground material ; the cooling is obtained by the use of liquid nitrogen.

FIG. 3

EP 0 511 176 A2

Jouve, 18, rue Saint-Denis, 75001 PARIS

SPECIFICATION

Current methods for the disposal of solid urban waste (S.U.W.) exhibit characteristics of such a nature as to make them rather unacceptable from the environmental point of view in the broad sense. The opposition on the part of people living in the vicinity of thermodestruction installations or of dumps finds its justification in a series of motives which range from genuine and actual attacks on public health (dioxins, noxious fumes, heavy metals, and others), which are due to inadequate installations, to a fall in house prices in residential areas, which is due to the presence of installations or dumps. This has given rise to an increase in disposal costs, without a real solution to the central problem being found to date.

The object of the present invention is to provide a definitely acceptable method, which makes possible the breakdown and the grading of solid urban waste from an industrial point of view and with a view to the reuse thereof, without adopting a route involving any process of thermodestruction.

A first subject of the invention is a process for the destruction of solid urban waste and for the recovery and use of the pertinent components, which process comprises: forced cooling; the grinding of the material which has been hardened and made fragile by the cooling; and the ballistic and magnetic grading of the ground material.

The cooling may be obtained by the use of liquid nitrogen.

The process may advantageously comprise a preliminary phase of dehumidification, which may be carried out under vacuum.

It is also possible to contemplate a recovery of the vaporised nitrogen for a preliminary cooling of the waste to be processed, or for other uses involving degraded cold.

A second subject of the invention is an installation for carrying out the destruction of solid urban waste and for the recovery and use of the pertinent components, which installation comprises: a unit for cooling the waste; an assembly for grinding the cooled waste; a magnetic selection unit and a unit for the ballistic selection of the ground material.

The cooling unit may be a liquid nitrogen unit.

The installation may comprise a preliminary unit for dehumidification, especially under vacuum, similar to a freeze-drying system, with cooling also combined with the system for producing the liquid nitrogen.

In one solution, the installation may comprise means for advancing the material, means for distributing liquid nitrogen along said means for advancing the material, and means for distributing liquid nitrogen also within the grinding assembly. There may also be provided means for the recovery and the reuse of nitrogen utilised in the cooling.

The invention will be better understood upon following the description and the accompanying drawing, which shows a non-limiting illustrative embodiment of said invention. In the drawing:

Figs 1 and 2 show two possible schemes of production of liquid nitrogen;

Figs 3 and 4 show schemes for processing the S.U.W. by cooling and grinding;

Fig. 5 shows a scheme for magnetic and ballistic grading; and

Fig. 6 shows a scheme for a dehumidifying installation.

A complete cycle of processing of the S.U.W. provides the following phases:

A) collection of the waste by means suitable for ramming down the S.U.W. within leaktight containers, and transport of said containers to appropriate collection sites;

B) conveyance of the containers to the processing installation by rail, road, waterway or - where appropriate - by the same means as the collection means;

C) processing of the S.U.W. in an industrial installation which provides:

a) optional dehumidification of the S.U.W. in an installation under vacuum;

b) contact with liquid nitrogen;

c) breaking up of the S.U.W. in appropriate mills, which are in most cases also cooled;

d) ballistic and magnetic grading of the products obtained, for their recovery and reuse.

In practice, the by-products obtained from the grading are reusable as fuel, as fertiliser, as scrap for glassworks, as scrap for foundries or as heavy metals.

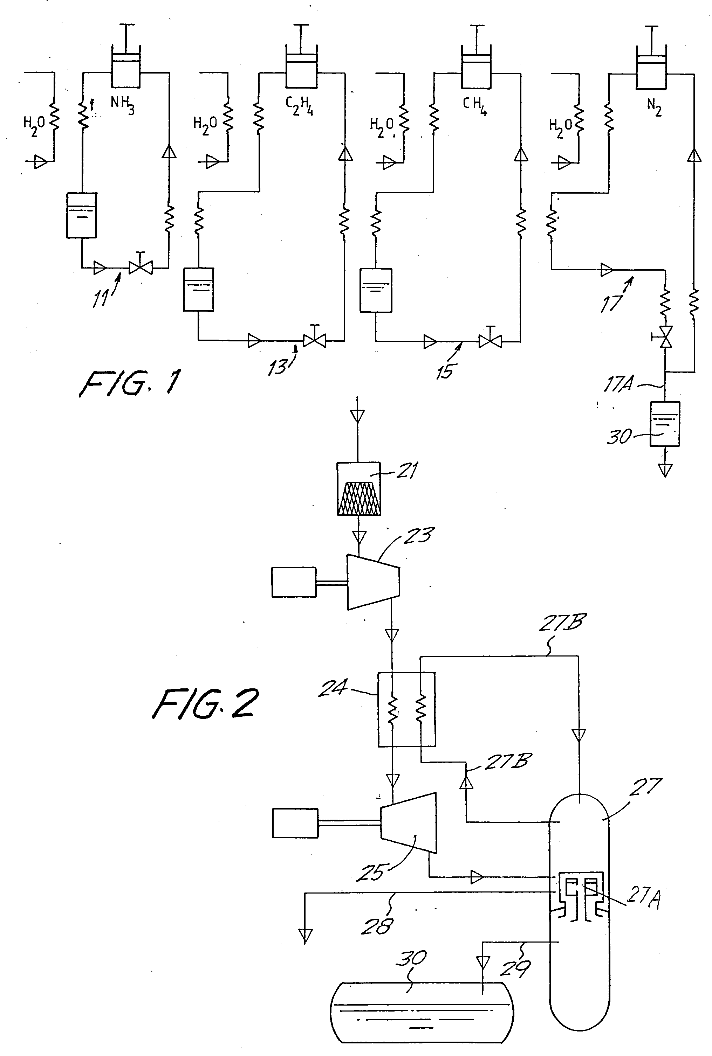

The liquid nitrogen required for the process may be produced in a conventional multi-stage installation described in Fig. 1, with a cycle essentially consisting in cooling a gas compressed by means of the evaporator of a refrigeration cycle, performed by another gas, the evaporation temperature of which is less than the condensation temperature of the preceding gas, and in passing that gas to evaporate in a condenser of a third gas. In the scheme of Fig. 1, sequential use is made of ammonia, ethylene, methane and finally the nitrogen to be liquefied. In Fig. 1, 11 indicates the first cycle using ammonia ($NH_3$), 13 indicates the second cycle using ethylene ($C_2H_4$), 15 indicates the third cycle using methane ($CH_4$) and 17 indicates the final cycle using nitrogen ($N_2$); all the cycles exhibit water heat exchangers and heat exchangers between contiguous cycles in order to obtain condensation and evaporation. The liquid nitrogen is obtained at 17A.

Fig. 2 illustrates an installation for fractionation of the air filtered at 21, using a compression turbine 23 and an expansion turbine 25, the expanded fluid of which is subjected to subsequent condensation in a fractionating column 27, from which liquid oxygen separates out at 28 and liquid nitrogen at 29. The filtered air is compressed and thus heated by the compression turbine 23, and subsequently undergoes a first cooling in the exchanger 24; in the expansion turbine 25 the air expands, cooling down, and in the fractionating column 27 there is a separation between oxygen and nitrogen which are liquefied in the condenser 27A and passed along 28 and 29 to their collection reservoirs. A proportion of nitrogen which is still in the gaseous state is utilised for the exchanger 24, along the line 27B.

The liquid nitrogen is easily held in a Dewar reservoir 30, with thermal bridges reduced to the minimum possible and with interspaces under vacuum; the liquid nitrogen is passed from the reservoir to the installation with a feedscrew and grinding mill.

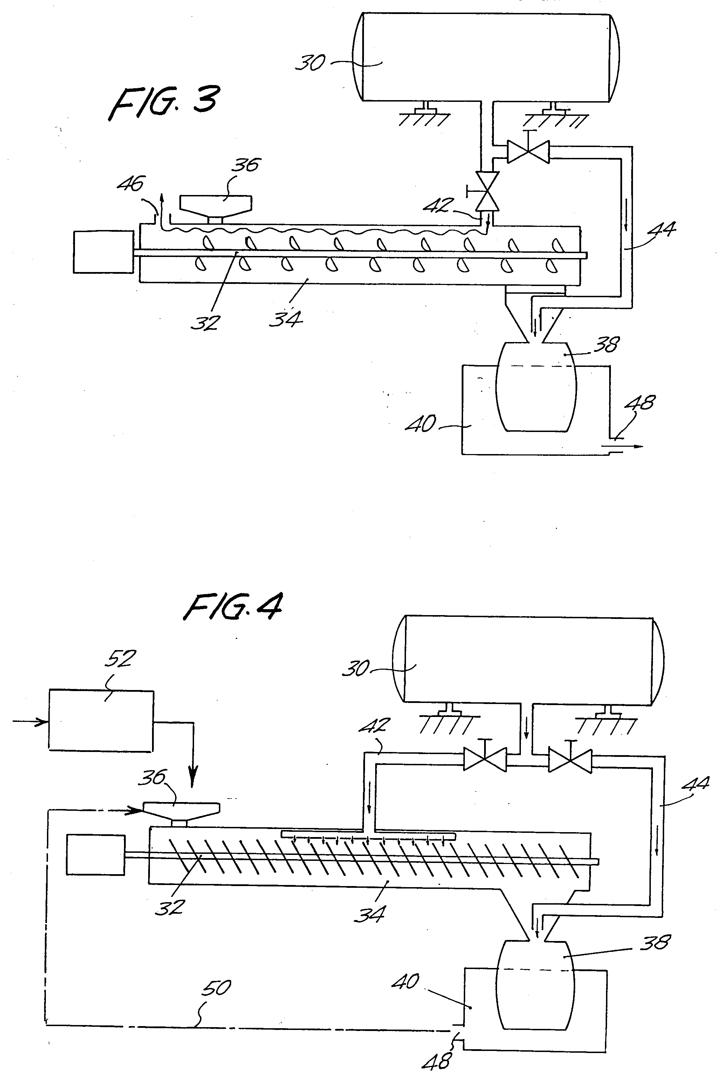

In Fig. 3, 32 indicates a screw or shaft with scoops for the advance, received in a cooling chamber 34, to which the material of the S.U.W. is fed by a hopper 36; from the chamber 34, the material reaches the grinding mill 38, which is contained within a chamber 40. The liquid nitrogen from the reservoir 30 is fed in part by the duct 42 to the chamber 34, and in part by the duct 44 to the inlet mouth of the mill 38, with appropriate flow regulators. The nitrogen from the duct 42 follows a cooling and evaporation path - in countercurrent to the material; the nitrogen vapours escape from an outlet 46 for a possible subsequent utilisation, and in part may act on the material arriving in the hopper. The nitrogen from the duct 42 completes the cooling of the material to be ground and cools the mill 38; the ground material collects in or passes through the chamber 40, and further nitrogen vapours may subsequently be utilised from an outlet 48. According to the variant of Fig. 4, the nitrogen in the chamber 34 is distributed in the manner of rain onto the advancing material. From the outlet 48, the nitrogen may be conveyed by 50 to the hopper 36, for a preliminary cooling of the material.

The container containing S.U.W. is evacuated by means of a mechanical motor unit at the inlet of the hopper 36 for feeding the chamber 34 of the screw 32. Here, the material to be broken down is struck, in countercurrent (Fig. 2) or in the manner of rain (Fig. 3) with the liquid nitrogen originating from the Dewar vessel 30. From the screw or the like, where it undergoes the violent impact of the cold of the nitrogen, the material passes to the grinding mill, where the material is ground, being intensively cooled and thus made fragile and grindable.

The vapours discharged from the installation may find beneficial secondary applications which are indicated hereinbelow.

According to a possible development of the invention, the low-temperature breaking-down installation may be fed in certain circumstances with material which has been partially dehydrated under vacuum. It is possible to adopt a process for dehydration under vacuum, for example of a type similar to that of freeze-drying. The material to be dehydrated undergoes a cooling in a suitable installation under vacuum 52 (Fig. 4), thus causing the evaporation of a high percentage, and even almost the entirety, of the water present in the material and which is emitted into the atmosphere. The cooling may be performed in an intermediate stage of the process of production of the liquid nitrogen according to Fig. 1, for example in the methane cycle, indicated by 15 in Fig. 1. This leads to a simplification of the mechanical breakdown installation, especially in cases in which the waste has a high liquid content. In this case, the water expelled from the installation in the form of vapour may be emitted directly into the atmosphere, as it has a high degree of purity.

More especially (see Fig. 6), the waste is introduced into a prefreezer 54 via a feed device 56; in the prefreezer, the waste undergoes a cooling down to -40/-50°C, produced by a suitable refrigeration assembly 58 or combined with the installation for the production of the liquid nitrogen (Fig. 1) taking place in one of the intermediate stages, such as the methane stage. The prefrozen waste passes into a dryer 60, associated with a heater 62; the dryer 60 is under conditions of vacuum, produced by a pump 64, which operates through a condenser 66. The function of the heater 62 is to raise the temperature of the dryer by a few degrees, so that the ice present in the waste can sublime and thus pass directly from the solid state to the vapour state. The waste which has been dried in this manner can pass out from 68, at very low temperatures below zero, and under these conditions can come to feed directly the processing installation itself, with an advantage in terms of energy. The presence of the condenser 66 facilitates the dehumidification and prevents the moisture from reaching the rotary pump 64, with consequent possible malfunctions of the latter; thus, the vapour is cooled to approximately -60/-65°C in such a manner that it condenses and can be removed; a refrigeration unit 70 provides this cooling. In practice, the prefreezer 54 and the dryer 60 are combined in a single environment, where the procedure involves firstly the phase of prefreezing with cooling and subsequently that of sublimation with heating.

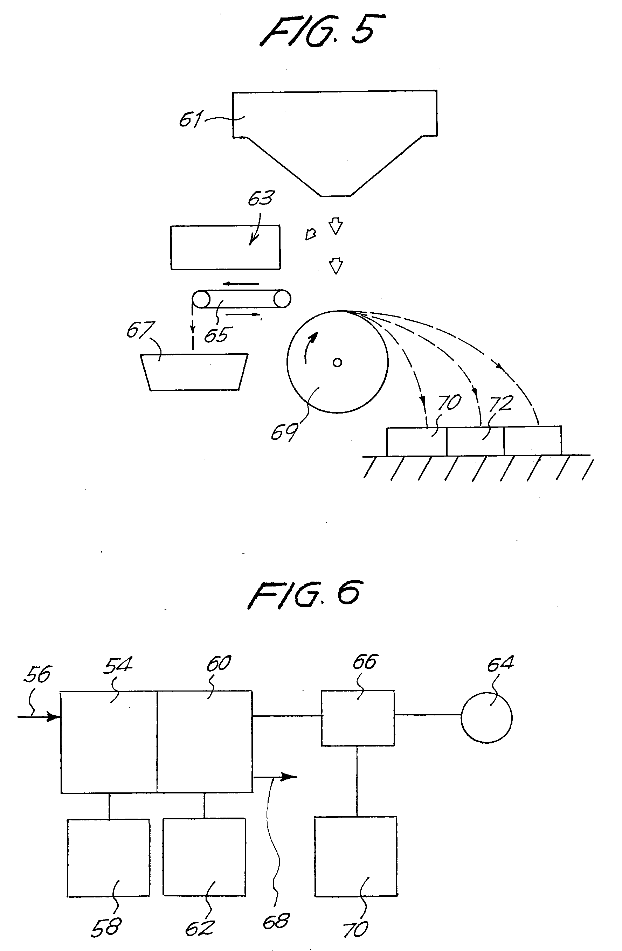

The products obtained by the grinding are conveyed to the subsequent magnetic and ballistic separation installation, which is diagrammatically shown in Fig. 5. This installation comprises a hopper for loading the ground waste, which may be distributed, for example, by falling through a magnetic separator 63 so as to collect the ferromagnetic materials, which are discharged onto a belt 65 so as to transport the selected magnetic material to a collection reservoir 67. The material containing no ferromagnetic components reaches a dynamic separator 69, which provides the ballistic selection, throwing in the direction of reservoirs 70, 72 etc., for the differentiated collection of the materials, such as organic materials, plastic, glass and metals.

The particle size may be to a greater or lesser extent homogeneous, since some materials tend to break easily while others - specifically the metals - remain in larger pieces.

The lightest fraction - which is the organic fraction - resulting from the ballistic grading possesses a calorific power of approximately 6000 kcal/kg and will represent, on average, 1/5 of the original weight of the S.U.W. This by-product may be likened to a rich lignite or to a poor wood charcoal; it may directly feed existing coal-burning or multifuel thermoelectric power stations, with the expedient precaution of an afterburner for the emergent gases at 1200°C, in order to eliminate any presence of noxious gases. The ash resulting from the power station is the sole derivative of the S.U.W.

The installation described here accordingly eliminates the need for incinerators and dumps, permitting instead the selection and the recovery of materials on an industrial basis.

It is clear from the aforegoing that the process and the installation under discussion offer great advantages, among which the following may be mentioned:

a - breaking down and recovery of solid urban waste (S.U.W.) by means of installations operating using electrical power distributed by the industrial grid, without the use of thermal energy and the emission of the fumes associated therewith;

b - the aseptic nature of the process, which provides for all the waste to be brought to a temperature of -200°C;

c - elimination of any type of incinerator, doing away not only with the fumes but also with the ash and with the associated disposal problems;

d - mechanical reduction of any type of waste (metallic or organic) to very small particles having a particle size which is to a greater or lesser extent uniform, with the use of small quantities of energy, given the fragility attained by the waste at the very low temperatures employed;

e - selection of the products resulting from the grinding by means which are virtually of conventional type, facilitated by the small dimensions of said particles;

f - possibility of recovery of a large proportion of the energy expended for the purposes of cooling, utilising the light fraction of organic nature, which constitutes a fuel which is of particular benefit in terms of calorific power, size and limited amount of ash generated thereby;

g - possibility of utilising either coal-burning or mixed-fuel thermoelectric power stations for the purpose of burning the fuel obtained, with possible slight modifications, as indicated hereinabove;

h - ease of reuse of all the heavier by-products obtained from the selection (heavy metals, iron, aluminium, glass, etc.) with the consequent elimination of dumps for the ash (which is nowadays an inevitable final product of incineration with the presence of the residues of said heavy by-products); the only ash is the residual ash from the combustion (in a power station) of the combustible by-products;

i - no requirement to perform a costly and difficult differentiated collection;

k - no impact on the environment, and certainly an improvement as compared with the methods in current use;

l - an already in-depth knowledge of the proposed techniques, which are nowadays already employed in particular sectors, such as the breaking down of motor-vehicle scrap;

m - extreme competitiveness of costs, as compared with current cost levels. As against the current cost of approximately 150 LIT/kg for full processing by means of incineration, 88 LIT/kg may be considered to be the cost of the liquid nitrogen process, 110 LIT/kg the cost of the grinding and selection installation, and 50 LIT/kg the cost of collection and transport, while it is necessary to consider at least 100 LIT/kg in terms of recovery of fuel and raw materials;

n - some subsidiary applications are possible for the liquid nitrogen vapours and for the degraded refrigeration units, even within an urban or suburban environment, for example in magnetically sustained railways using a linear motor (superconductors), which require low operating temperatures, and other applications such as refrigeration centres, ice rinks etc.; all this is possible at very low cost, which could easily be derived from the proposed installation.

It will be understood that the drawing shows only an exemplification given purely by way of practical demonstration of the invention, it being possible for this invention to vary in terms of forms and arrangements without thereby departing from the scope of the concept which forms said invention.

For example, other gases can be used rather than nitrogen, e.g. $CO_2$. When reference is made to nitrogen if must be understood that this can be also a different refrigerating medium of suitable features.

## Claims

1. Process for the destruction of solid urban waste and for the recovery and use of the pertinent components, characterised: by forced cooling; by the grinding of the material which has been hardened and made fragile by the cooling; and by the ballistic and magnetic grading of the ground material.

2. Process according to the preceding claim, characterised in that the cooling is obtained by the use of liquid nitrogen.

3. Process according to preceding claims, characterised by a preliminary phase of dehumidification.

4. Process according to Claim 3, characterised in that the dehumidification is carried out under vacuum.

5. Process according to Claims 1 and 2, characterised by the recovery of the vaporised nitrogen for preliminary cooling of the waste to be processed, or for other uses involving degraded cold.

6. Installation for carrying out the destruction of solid urban waste and for the recovery and use of the pertinent components, characterised in that it comprises: a unit for cooling the waste; an assembly for grinding the cooled waste; a magnetic selection unit and a unit for the ballistic selection of the ground material.

7. Installation according to Claim 6, characterised in that the cooling unit is a liquid nitrogen unit.

8. Installation according to Claim 6 or 7, characterised in that it comprises a preliminary unit for dehumidification, especially under vacuum.

9. Installation according to Claim 8, characterised in that said unit operates as a freeze-drying unit with cooling under reduced pressure and slight heating for the sublimation.

10. Installation according to Claims 6 and 7, comprising means for advancing the material, characterised in that it comprises means for distributing liquid nitrogen along said means for advancing the material, and means for distributing liquid nitrogen within the grinding assembly.

11. Installation according to Claim 10, characterised in that it comprises means for the recovery and the reuse of nitrogen utilised in the cooling.

12. Installation according to Claims 9 and 10, characterised in that it comprises means for the direct feed of the dehydrated and cooled waste from the dehumidifier to the means for advancing the material.

FIG. 1

FIG. 2

6

FIG. 3

FIG. 4

## FIG. 5

## FIG. 6